# EUROPEAN PATENT SPECIFICATION

(11) **EP 2 356 495 B1**
(45) Date of publication and mention of the grant of the patent: **22.05.2013**
(21) Application number: 09764281.3
(22) Date of filing: 16.11.2009
(51) Int. Cl.: G01V 5/00, G01V 15/00

(54) **TRACKING DEVICE, SYSTEM AND METHOD**
TRACKINGEINRICHTUNG, SYSTEM UND VERFAHREN
DISPOSITIF DE REPÉRAGE, SYSTÈME ET PROCÉDÉ AFFÉRENTS

(30) Priority: 18.11.2008 GB 0821049
(43) Date of publication of application: 17.08.2011
(73) Proprietor: Kromek Limited, Sedgefield, Durham TS21 3FD (GB)
(72) Inventor: RADLEY, Ian, Durham TS21 3FD (GB); BASU, Arnab, Durham TS21 3FD (GB); ROBINSON, Max, Durham TS21 3FD (GB)
(74) Representative: Wilson, Peter
(86) International application number: PCT/GB2009/051542
(87) International publication number: WO 2010/058202

(56) References cited:
- WO-A2-2006/025867
- US-A1- 2005 046 567
- US-A1- 2007 008 115
- US-A1- 2007 291 690
- US-A1- 2008 262 646

## Description

The invention relates to a device to enable the tracking and verification of identity of a radioisotope source over time, in particular within a container defining a radiation-shielded enclosure, to a system employing such a device, and to a method of tracking and verification of a radioisotope source over time.

Radioisotope sources find a variety of applications, for example as radiation sources for medical use, and for example for radiography to treat cancer patients, as irradiators to preserve food, in industrial radiography as a method of quality control of as-fabricated and welded structures, for thermoelectric generation of electricity and for other purposes.

The handling and movement of radioisotope sources through the supply, use and disposal chain poses potential threats to the environment, health and safety and security. It is desirable that the location of isotopes is tracked accurately. It has been reported that over 300 radioactive sources go missing each year (Tracking Radioactive Sources in Commerce, F T Sheldon & R M Walker et al, WM'05 Conference, Feb 27 - March 3 2005, Tucson, AZ). This loss of radioactive material poses an environmental health and safety threat and also a security threat.

An effective system for tracking and monitoring of radioisotope sources will increase security on radioactive shipments and help prevent inadvertent or illegal loss of sources. Methods for tracking of assets and personnel using RFID devices are known and recent advances have been assisted by developments in electronics, wireless communications and global positioning systems. Such systems are widely used for example in the global tracking of shipping containers. In a possible example of the application of RFID to the tracking of radioisotopes a system may use RFID tags attached to radioisotope containers to track the location of the container.

"RadSTraM: Radiological Source Tracking and Monitoring, Phase 2 Final Report", published by Oakridge National Laboratory on January 26 2007.

It describes a radiological source tracking and monitoring system, and boxes for use in such a system, which boxes have attached RFID modules external to the enclosed volume including suitable arrangements of antennae for communication with a central processor and database for the tracking of multiple such boxes. A box defines an enclosure that comprises a fully radiologically shielded fully enclosed volume for the source. This enclosure embodies radioactive shielding made from or lined with a dense metallic material defining a volume that constitutes a Faraday cage radiologically isolated from the external environment.

However there is no radiation detector within the box containing the source, and within the radiation shielded environment therein.

Such a tracking system is presented in the paper.

However, radioisotope containers present a number of very different problems to shipping containers, and not merely considerations of scale. It is generally necessary that a radioisotope is contained within a suitable enclosure or capsule for safe handling, for example in a medical facility such as a hospital, and therefore there will be no chance that any radio signal can be transmitted from the inside. Any RFID device that might be used will need to transmit from the outside. One major shortfall in RFID systems for tracking radioisotopes using RFID tags is therefore that the RFID devices are attached to the containers and only give an indication of the whereabouts of the container. It is not possible to verify that the contents of the container within the radiation-shielded enclosure are as they should be without opening the container to carry out an inspection of the radioisotope source. This limits the effectiveness of the tracking system as regards tracking the radioisotope sources themselves, since verification of radioisotope contents, as opposed to mere verification of the container, necessarily requires compromising the radiation protection provided by the enclosure. A system which verifies both enclosing container and enclosed contents without compromising the radiation protection is to be preferred

Thus, in accordance with the invention in a first aspect a tracking device for use with a radioactive material comprises:
- a radiation detector associatable with a radioactive material in that it is adapted to be placed in use within a container for containing a radioactive material in a radiation-shielded enclosed volume, to detect radiation activity from the material in the enclosed volume;
- a radio frequency identification module associatable with a container for containing a radioactive material, which comprises at least:
   - a data register to store a unique product identification code,
   - a processor with a data transfer link to each of the radiation detector and data register to receive and process a live data stream of activity data from the detector and associate this with the unique product identification code in a processed data packet,
   - an antenna to enable transmission of a data item comprising both the unique product identification code and processed activity data to a remote data capture means,
- wherein at least the antenna is adapted to be placed in use in mechanical association with a container but outside the radiation shielded enclosed volume.

A tracking device in accordance with the invention is intended in particular for use with a radioactive isotope source contained within a suitable enclosure which is designed to allow its safe handling by containing radiation in an enclosed volume and preventing radiation from being transmitted to the environment external to the enclosed volume. The container this comprises radiation shielding to define when closed a radiation-shielded enclosure substantially radiologically isolated from the external environment. A radiation detector is provided for association with a radioisotope source and in particular for placement into an enclosure adapted to contain such a radioisotope source for detecting radiation. Further means are provided comprising elements of a radio frequency identification module. The radio frequency identification module comprises a data register storing a unique product identification code which serves uniquely to identify a radioactive material with which it is associated and in the particular case a container to which it is attached or integrally formed with, and an antenna to allow this to be retrieved by interrogation by and/ or transmitted to a remote data capture means. To that extent the radio frequency identification module functions in similar manner to a conventional RFID tag.

However, at least the antenna of the radio frequency identification module is adapted to be placed in mechanical association with a container but outside a contained volume and hence outside the radiation-shielded enclosed volume, but the radio frequency identification module additionally comprises a processor capability with a first data link to the detector to receive dynamically streamed activity data during use from the detector inside the radiation-shielded enclosed volume. The processor has a further data link to the data register, for example in that the data register is integral with the processor in a single integrated circuit or like means. This enables the processor to co-process the unique identification code with the streamed activity data and generate a data item combining both the unique identification code and activity data. The antenna associated with the radio frequency identification module enables transmission of this combination data item to a remote data capture means, for example on interrogation of the device by such a remote data capture means.

In prior art systems which rely on an RFID tag carrying a unique product identification alone, the tag can be tracked by provision of a suitable central tracking system, and suitable data retrieval and communication means. However, fundamentally, this merely constitutes a tracking of the tag. If the tag is associated with a container, the container can then be tracked. However, the RFID tag alone provides no way of determining whether the contents of the container remain as expected, and remain uncompromised etc.

A conventional radiation detector alone allows the detection of radiation, for example if radiation leaks from a container, or if a container is opened to verify its contents, or if a source is not contained, but does not generally allow dynamic tracking of sealed containers where the very purpose of the container is to enclose a source and shield the radiation in the enclosed volume from the external environment, and where the enclosure is inherently compromised by or in any situation which might allow external detection of radiation.

However, by virtue of a combination in accordance with the invention, a unique product identification code fundamentally associated with the radioactive material source, and preferably with a contained source in a container, in the form of an identification module associated with the source and for example attached to or integral with the container, can be combined with a dynamic monitoring of the activity within the enclosed and shielded environment inside the container attributable to the stored radioisotope source. By provision of a suitable database, and suitable data capture means to allow data to be transmitted to a suitable central tracking system carrying that database, it is possible to combine in real time an ability to track containers and an ability to verify their contents, in particular without needing to interfere with those contents or open the container directly, and without fundamentally departing from the general principles employed for systems with a tracking capability.

The radiation detector is adapted to be placed within a container for radioactive material, which for example defines a shielded volume in use comprising a high-radiation environment, to detect radiation activity within the container. Conveniently, other components, for example comprising some or all of the elements constituting the radio frequency identification module, and at least comprising the antenna, are adapted to be placed in mechanical association with a container but outside a contained, radiation shielded and enclosed volume, in use comprising a low-radiation environment.

This deals in admirable manner with the very particular problems posed by the transport of enclosed radioactive sources, for example in a medical facility such as a hospital which are not encountered where conventional RFID tracking is employed for contained materials, as for example with large scale shipping containers.

Unlike the case with shipping containers that might carry radioactive material as a contaminant or contraband, the purpose of the enclosure is to carry a small source of radioactive material purposefully in an enclosed volume in an enclosed and radiation shielded manner such that it does not allow any radioactivity to escape from the enclosed volume. It follows that the enclosure will likely constitute a Faraday cage and that any RFID device that might be used will need to communicate from the outside of the enclosed volume. However, it also follows that the provision of a radiation detector outside the enclosed volume, such as might be considered for example to detect the unauthorised transfer of radiation in unsuitable containers, is inapplicable as in normal use there should be no radiation leak outside the enclosed volume.

These apparently contradictory requirements are met by the present invention, wherein the detector is placed in use inside the enclosed and shielded volume also containing the source in use, but the RFID module, or at least its antenna, is outside, and wherein a data connection is provided therebetween to pass data between the detector and the RFID module to allow information to be passed from inside the enclosed volume to the antenna outside the enclosed volume.

The data may concern whether the isotope is inside the container or not and/ or whether it is the correct isotope. This raises specific problems not associated with solutions where an external detector or fully external tag are used, as might be known for example in larger scale tracking of larger scale shipping containers and in the detection of contraband radiation. For example, the particular adaptations of the invention will require control electronics inside and outside the enclosure, raising issues as to how each of these circuits will be powered. Also of significance is the fact that any electronics within the enclosure will either have to be radiation hardened or shielded from the radiation. Electrical and communications contact through the wall of the enclosure must not compromise its radiation seal, and will for example at least require a non-linear path. These are very specific requirements for this particular application and are not a problem related to the tracking or detection of contraband radiation in shipping containers.

Conveniently at least the data register, processor and antenna are compactly associated together in a single radio frequency identification unit. For example, some or all of such components may comprise a single integrated solid state electronics unit. Preferably, the radio frequency identification unit comprises a housing defining attachment means for releasable or permanent attachment of the unit to a radiation shielded container externally of the radiation shielded volume as a radio frequency identification tag. Alternatively, the unit or component parts thereof may be integrally formed as part of such a container.

For many practical applications the tracking device will preferably further comprise or be adapted for use with a power source to power one or more of the identification unit, the processor, the antenna, and the detector. Preferably the power source is portable so that the device can operate without the need for connection to a mains power supply. The device preferably comprises or is adapted for use with a portable power supply, for example comprising a battery or a hydrogen fuel cell. A single power supply may power all those elements of the remote device requiring separate power. For example, the radio frequency identification module components may comprise an active or semi-active device. The power source may additionally power the detector. The detector may have its own power supply.

In a more complete aspect of the invention, a trackable container for storage and transit of radioactive material comprises:
- an enclosure of radioactive shielding material defining a shielded enclosed volume in which a radioactive material may be contained, and
- a tracking device as above described mechanically associated with the container in such manner that at least the detector is within the shielded enclosed volume, and in such manner that the remainder of the device is in direct mechanical association with the container and that at least the antenna is outside the shielded enclosed volume.

The container comprises a suitable enclosure or capsule for safe handling of a radioactive source, for example in a medical facility such as a hospital. The container comprises a radiation shielded enclosure suitable for containing such a radioactive material in an enclosed and radiation shielded manner. The enclosure is configured such that it does not allow any radioactivity to escape. For example the enclosure is made from, or at least lined with, a dense metallic material such as lead.

At least the antenna is associated with the container outside the radiation shielded volume. In a preferred embodiment, at least the data register, processor and antenna are associated with the container outside the contained and radiation shielded volume, and consequently outside the environment subject to high radiation intensity from the contained source in use. For example, at least these components may be mounted on a surface of the container or incorporated into the structure of the container to be disposed outside the radiation shielded volume. At least these components may compactly associated together in a single radio frequency identification unit, optionally comprising a housing defining attachment means by which the unit is attached to the container as a radio frequency identification tag.

This arrangement is particularly preferred because the two active components of the combined device work best in different environments. The radio frequency identification transponder and processor module works best outside a high radiation environment. Most particularly, the antenna only works effectively outside the enclosed volume because the enclosure is a radiation shield and is therefore usually made from, or at least lined with, a dense metallic material that will constitute a Faraday cage. Therefore, at least the antenna, and in the preferred case the entire radio frequency identification transponder and processor module, is outside the shielded high radiation environment defined by the enclosed volume of the container.

By contrast, the detector is not intended to detect radiation activity outside the shielded environment to give an indication of failure of isolation, but is instead intended to detect routine radiation at all times from within the shielded environment, to provide a means of identifying the contained material without requiring access to the shielded enclosed volume, and is required to be inside the high radiation environment specifically to detect the radiation attributable to a contained source. The invention is not directed to detecting unintended radiation externally as a mere safety measure, but to detecting and characterising intended radiation internally for specific verification of contents. The detector must therefore be inside the shielded high radiation environment in the enclosed volume, alongside the source in use.

The data link allows activity data to be streamed to a processor and antenna outside the shielded environment from a detector inside the shielded environment as required, and hence allows a verification signal to be addressed from outside the shielded high radiation environment which is in part based on a real time verification of the contents inside the shielded high radiation environment (from the radiation signature detected therein) without compromising the radiation shield of the enclosure.

In a further more complete aspect of the invention, a system for tracking at least one radioactive material source comprises:
- at least one tracking device as above described associated with such a radioactive material source and/or at least one radiation-shielded container as above described suitable for containing such a radioactive material in an enclosed and radiation-shielded manner;
- a radioactive material management system which includes at least one database, the at least one database having a set of electronic data records stored therein providing an associative reference between a unique identification code and an expected radioactive activity behaviour for at least one, and preferably each, radioactive material source;

- data capture means for capturing a data item including the unique product identification code and processed activity data from a tracking device from time to time, and for passing the data to the management system;
- wherein the management system is adapted to make use of the unique product identification code thereby received to identify the first set of electronic data records stored in the dataset by association with that code, to make a comparison of the received activity data associated with that unique product identification code and predicted activity data from the database, and to output a result of that comparison as a verification of the radioactive material.

In a typical system there is provided a large plurality of tracking devices as above described each associated with a radioactive material source and/or with a container as above described suitable for containing such a radioactive material source, each of the data registers of the radio frequency identification modules of each such said device being provided with a unique product identification code. The at least one database will preferably then comprise a set of stored electronic data records providing an associative reference between each unique identification code and an expected radioactive activity behaviour for each associated source.

Thus, the central tracking system can track the location of each source/container and compare activity date with forecast activity level determined from knowledge of the supposed source/ container contents, and in particular from elapsed time, half life etc. If the actual activity level does not correspond with the activity level forecast from the half life data then the source material can be assumed to be compromised, for example missing from the container, or being the incorrect radioisotope. The central tracking system, having identified such a verification failure, knows the location of container and can initiate an appropriate action to investigate the discrepancy.

If the measured activity level does correspond with the forecast activity level then the central tracking system can confirm that the correct radioisotope is in the correct container and position.

In a possible system, a plurality of automated and/ or user-operated data capture units may be provided for capturing data from tracking devices at a plurality of remote distributed locations, some or all of the data capture units being remote from the management system, and in remote data communication therewith. Thus, a plurality of sources may be tracked at or via a plurality of remote locations.

In a possible system, the foregoing may be incorporated into an area access control such as a building access control, for example in that data capture units may be provided for capturing data from tracking devices at locations of controlled access to area/ building and thereby to identify when a radioactive source material passes into or out of the area/ building.

With appropriate control protocols it is then possible for example to: permit entry only into those areas authorised to handle the radioisotope and only with personnel trained in the handling of the radioisotope; prohibit radioisotope from entering unauthorised areas or entry with unauthorised personnel; or
prohibit a person and/or an isotope from leaving an area.

Conveniently, the radioactive material management system is adapted to output a verification data result in the form of a two state or pass/fail result indicating whether the contents of the container associated with the unique product identification code received correspond to the expected activity stored in the database, for example within predetermined tolerance limits.

When contents of a radioisotope container are verified by detector count rate to determine activity within the container the measured activity data can be recorded by the radioactive material management system to update half life activity calculations.

Communication between tracking device and radioactive material management system and where applicable between remote data capture units and tracking devices and radioactive material management system is preferably wireless with communication being performed by known wireless communication means. Alternatively, for example especially in the case of communication between management system and data capture units, communication may be wired.

The detector may be adapted to work in continuous mode, to detect at fixed time intervals, or to detect when the identification unit is interrogated by a remote data capture unit.

In order to preserve power for the detector to increase life of the portable power supply, a count rate to determine activity is preferably only taken when a container is closed and sealed.

The detector preferably comprises a detector element fabricated from a semiconductor material or materials selected to exhibit inherently as a direct material property a direct variable electrical and for example photoelectric response to source radiation. For example the semiconductor material is a wide direct bandgap semiconductor.

In a preferred case, the semiconductor material making up the detector element preferably comprises material having a high absorption for gamma rays so that a detector of relatively small size, for example smaller than 5cm³ and preferably smaller than 1cm³, can still give a good activity count rate. This allows the detector to be kept small. This means, particularly in the case of the preferred embodiment where components of the radio frequency identification module are compactly associated together in a single compact unit that the tracking device of the invention need take up relatively little space. It is generally undesirable, when the tracking device is used with a container, and in particular when at least the detector is within the container, for the tracking device/ detector to be too large. A container defines a shielded volume in which a radioisotope source material can be placed, which is typically made of dense and/ or expensive material. Anything which increases the container size is undesirable. A compact tracking device in accordance with the present invention, with a compact detector fabricated from a dense material, reduces this problem.

The detector element preferably comprises a semiconductor material or materials formed as a bulk crystal, and for example as a bulk single crystal (where bulk crystal in this context indicates a thickness of at least 500 µm, and preferably of at least 1 mm).

The materials making up the semiconductor detector element are preferably selected from cadmium telluride, cadmium zinc telluride (CZT), cadmium manganese telluride (CMT), germanium, lanthanum bromide, thorium bromide. Group II-VI semiconductors, and especially those listed, are particularly preferred in this regard.

The materials making up the semiconductor detector element are preferably selected from cadmium telluride, cadmium zinc telluride (CZT), cadmium manganese telluride (CMT) and alloys thereof, and for example comprise crystalline Cd_{1-(a+b)}MnₐZn_{b}Te where a+b <1 and a and/ or b may be zero.

A detector in accordance with the invention may comprise a single detector element or a plurality of discrete detector elements making up a multi-element system. A detector may have no spatial resolution, which counts radiological activity only, or a detector may be capable of resolving incident radiation spatially.

A system in accordance with the invention comprises various data processing and data storage modules performing various data processing and data storage functions. It will be understood generally that a data processing module of the invention can comprise and data storage function invention can be implemented by a suitable set of machine readable instructions or code. These machine readable instructions may be loaded onto a general purpose computer, special purpose computer, or other programmable data processing apparatus. For example the radioactive material management system and/ or the at least one database thereof may be provided by such machine readable instructions loaded onto a suitable programmable data processing apparatus.

These machine readable instructions may also be stored in a computer readable medium that can direct a computer or other programmable data processing apparatus to function in a particular manner, such that the instructions stored in a computer readable medium produce an article of manufacture including instruction means to comprise some or all of the elements of the tracking system of the invention, and in particular of the radioactive material management system. Computer program instructions may also be loaded onto a computer or other programmable apparatus to produce a machine capable of implementing a computer executed process such that the instructions are executed on the computer or other programmable apparatus providing some or all of the elements of the tracking system of the invention, and in particular of the radioactive material management system of the invention. It will be understood that a tracking system may comprise any suitable combinations of special purpose hardware and/ or computer program instructions on a programmable data processing apparatus.

In a further aspect of the invention, there is provided a method of tracking and verification of a radioactive material source, and more preferably of a plurality of such sources, over time, the method comprising:
- associating a radiation detector with a radioactive material, by placing a radiation detector within a container a radiation shielded enclosed volume in which is contained radioactive material;
- associating a radio frequency identification module with a radioactive material in data communication with the radiation detector, which module comprises at least a data register to store a unique product identification code, a processor to receive and process a data stream of activity data from the detector and associate this with the unique product identification code, and an antenna, such that at least the antenna is placed in mechanical association with a container but outside the radiation shielded enclosed volume;
- operating the processor to produce a data item comprising both the unique product identification code and processed activity data;
- retrieving the data item via a remote data capture means;
- passing the data item to a radioactive source material management system which includes at least a database having a set of electronic data records stored therein providing an associative reference between a unique identification code and an expected radioactive activity behaviour for each radioactive material source;
- for each data item so transmitted, using the unique product identifications code received by the management system to identify the first set of electronic data records stored in a data set by association with that code;
- comparing predicted activity data from the database with received activity data, for example within predetermined tolerance limits;
- outputting the result of that comparison as a verification of the radioactive material source.

In a preferred embodiment, a plurality of tracking devices are provided, each associated with an individual radioactive material source by being placed in mechanical association with and for example on a container enclosing such an individual source in a radiation-shielded manner.

A processor of an identification module may operate to process activity and identification data as above described on a continuous basis, on a periodic basis during a set time interval, or when interrogated by a remote data capture means as part of the data capture step. Where a system comprises multiple tracking devices and/ or multiple data capture means the method may be performed periodically or continuously, by an automated process under user control, based on the proximity of a detector to a data capture means, or otherwise as required.

The method is in particular therefore a method of use of a tracking device and system as here and before described, and other preferred features of the method will be understood by analogy.

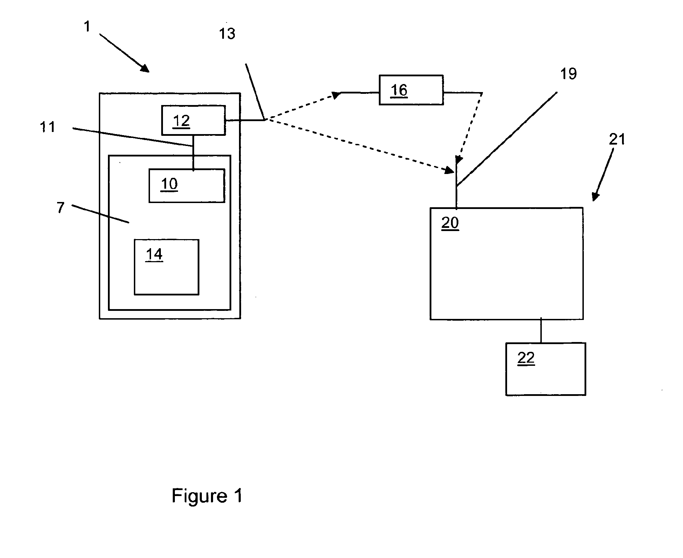

The invention will now be described by way of example only with reference to the accompanying Figure 1, which is a general schematic of a possible tracking system operating in accordance with an embodiment of the invention, and making use of a tracking device in accordance with an embodiment of the invention.

Figure 1 illustrates a simple schematic of a tracking system in accordance with the invention in which is illustrated a single container 1 for a radioisotope source in communication with a central tracking management system 21. Of course, it will be understood that in practice a large plurality of such containers will typically be provided, tracked for instance from one or a small number of central tracking locations.

A container 1 defines a shielded volume 7, for instance shielded by a suitable radiation shielding wall material, in which a radioisotope source 14 that it is desirable to track is contained. Also within the volume 7, a detector 10 is provided comprising a detector element of suitable semiconductor material, in the embodiment comprising cadmium telluride, cadmium zinc telluride, cadmium magnesium telluride or some suitable alloy combination thereof, together with a suitable control electronics to receive and process the response of the semiconductor to radiation activity within the container and to pass the same via the data link 11.

The precise structure of control electronics is not particularly pertinent to the invention. The selection of materials is significant, since it is desirable that the detector element is relatively small and dense. Conventional large detector elements are impractical in this application, since a large detector element, which necessarily then takes up a large space in the volume 7, requires the overall container 1 to be larger. This makes it heavier and more expensive, particularly given the significant material requirements imposed by the need for radiation shielding. A compact detector element, such as is offered by cadmium telluride, significantly reduces the size of the overall detector apparatus, and makes a detector within the contained volume practical.

Radiation activity data collected by the inherent response of the detector element is passed via the data link 11 to a radio frequency identification device (RFID) 12 which includes a unique code identifying the particular container 1. The RFID device 12 is additionally modified to include a processing means which enables it to cope with a live data stream via the data link 11 from the detector 10. This is processed in such a manner that the unique product identification data is associated with the data stream of activity data in a single transmittable data packet which may then be passed via the antenna 13 to a receiver remotely stationed from the container 1 for example by active transmission or on interrogation by the receiving station.

A power source, preferably comprising a portable power source such as a battery or hydrogen fuel cell, may be provided (not shown) in or in association with the container to power the detector 10. Preferably, the detector is activated only when the container is filled and sealed. This or a further source may additionally power the RFID device 12 or components thereof such as the processor and/ or antenna. Thus, preferably, the RFID device 12 may be an active or semi-active RFID device.

Of necessity, the detector, or at least the detector element, must be within the shielded volume 7 in order to detect radiation activity therein with a radioisotope source 14 contained in the shielded volume 7. However, this provides a generally harsh environment electronically, and accordingly it is preferable, as in the illustrated embodiment, that the RFID device 12 and as much as possible of the associated control electronics and system is located outside the shielded volume, for example in a separate compartment of the container or on a surface thereof.

Data from the RFID device 12 including both unique container identification data and real time streamed radiation activity data from the shielded volume may be passed via the antenna 13 to a central management system 21. Two possible transmission paths are illustrated. In a simple embodiment, a receiving antenna 19 captures information directly to a central processor 20 of the central tracking system 21. In a more practical expanded system, multiple data capture means 16 are provided, which will typically be remotely distributed from the central management system 21, for example at a plurality of remote monitoring locations, to capture data from a plurality of RFID devices 12, and to transmit the same onward to a central management system. Such a general arrangement of tagged containers, remote data capture units, and central processing system will be familiar from general identification and tracking systems.

However, where the system in accordance with the invention differs notably is in that a data packet transmitted by the RFID device and ultimately retrieved and processed by the central processor 20 of the central tracking system includes not only mere identification data but also streamed data regarding activity within the contained volume associated with the container carrying that unique identification. The central processor unit 20 includes a data store which stores predicted activity data in an association library accessible with reference to a unique product identification code for each of the containers within the system and for each of their respective contents. The central processor includes a comparison module to compare received live streamed activity data from within a container with the predicted data calculated from the stored information, and uses this to verify the contents. Monitoring and tracking of the contents of a container, and thus in a more direct sense of the radioactive source as such is possibly in a dynamic, real time manner without accessing or otherwise requiring examination of the containers themselves, via a data transfer process which is no more complex in organisation than that of a conventional system which provides for mere container identification and tracking alone.

## Claims

1. A trackable container (1) for storage and transit of radioactive material (14) comprising:
an enclosure of radioactive shielding made from or lined with a dense metallic material defining a shielded enclosed volume (7) that constitutes a Faraday cage radiologically isolated from the external environment in which a radioactive material may be contained, and
a tracking device for use with a radioactive material **characterised by**:
a radiation detector (10) associatable with a radioactive material (14) in that it is adapted to be placed within the container (1) to detect radiation activity from the material in the enclosed volume;
a radio frequency identification module (12, 13) associated with the container (1), which radio frequency identification module (12, 13) comprises at least:
a data register to store a unique product identification code which serves uniquely to identify a radioactive material (14) with which it is associated,
a processor with a data transfer link to each of the radiation detector and data register to receive and process a live data stream of activity data from the detector and associate this with the unique product identification code in a processed data packet,
an antenna (13) to enable transmission of a data item comprising both the unique product identification code and processed activity data to a remote data capture means (16);
wherein at least the antenna (13) is in mechanical association with a container (1) but outside the radiation-shielded enclosed volume (7).

2. A trackable container in accordance with claim 1 wherein some or all of the elements (12) other than the antenna (13) constituting the radio frequency identification module are in mechanical association with a container (1) but outside the radiation-shielded enclosed volume (7).

3. A trackable container in accordance with any preceding claim
wherein at least the data register, processor and antenna are compactly associated together in a single radio frequency identification unit (12, 13).

4. A trackable container in accordance with claim 3 wherein the radio frequency identification unit comprises a housing defining attachment means for releasable or permanent attachment of the unit to a container as a radio frequency identification tag.

5. A trackable container in accordance with any preceding claim further comprising a portable power source to power one or more of the identification unit, the processor, the antenna, and the detector.

6. A trackable container in accordance with claim 5 comprising a portable power source in the container to power the detector.

7. A trackable container in accordance with any preceding claim
wherein the detector (10) comprises a detector element fabricated from a semiconductor material or materials selected to exhibit inherently as a direct material property a direct variable photoelectric response to source radiation.

8. A trackable container in accordance with claim 6 wherein the materials making up the semiconductor detector element are formed as bulk single crystal and selected from cadmium telluride, cadmium zinc telluride (CZT), cadmium manganese telluride (CMT) and alloys thereof.

9. A trackable container in accordance with any preceding claim further comprising a radioactive material source contained within the enclosed volume.

10. A system for tracking at least one radioactive material source comprising:
at least one trackable container in accordance with one of claims 1 to 9;
a radioactive material management system (19, 20, 21) which includes at least one database, the at least one database having a set of electronic data records stored therein providing an associative reference between a unique identification code and an expected radioactive activity behaviour for at least one, and
preferably each, radioactive material source;
data capture means (16) for capturing a data item including the unique product identification code and processed activity data from a tracking device from time to time, and for passing the data to the management system;
wherein the management system (19, 20, 21) is adapted to make use of the unique product identification code thereby received to identify the first set of electronic data records stored in the dataset by association with that code, to make a comparison of the received activity data associated with that unique product identification code and predicted activity data from the database, and to output a result of that comparison as a verification of the radioactive material.

11. A system in accordance with claim 10 comprising a large plurality of tracking devices each associated with a radioactive material source and/or with a container suitable for containing such a radioactive material source, each of the data registers of the radio frequency identification modules of each such said device being provided with a unique product identification code.

12. A system in accordance with one of claims 10 to 11 further comprising a plurality of automated and/ or user-operated data capture units for capturing data from tracking devices at a plurality of remote distributed locations, some or all of the data capture units being remote from the management system, and in remote data communication therewith.

13. A method of tracking and verification of a radioactive material source (14), and more preferably of a plurality of such sources, over time, the method **characterised by**:
associating a radiation detector (10) with a radioactive material by placing a radiation detector within a container (1) comprising radiation shielding made from or lined with a dense metallic material to define when closed a radiation-shielded enclosure (7) that constitutes a Faraday cage radiologically isolated from the external environment in which is contained radioactive material;
associating a radio frequency identification module (12, 13) with a radioactive material in data communication with the radiation detector, which module comprises at least a data register to store a unique product identification code which serves uniquely to identify a radioactive material (14) with which it is associated, a processor to receive and process a data stream of activity data from the detector and associate this with the unique product identification code, and an antenna, such that at least the antenna (13) is placed in mechanical association with a container (1) but outside the radiation-shielded enclosed volume (7);
operating the processor to produce a data item comprising both the unique product identification code and processed activity data;
retrieving the data item via a remote data capture means (16);
passing the data item to a radioactive source management system (19, 20, 21) which includes at least a database having a set of electronic data records stored therein providing an associative reference between a unique identification code and an expected radioactive activity behaviour for each radioisotope source;
for each data item so transmitted, using the unique product identification code received by the management system to identify the first set of electronic data records stored in a data set by association with that code;
comparing predicted activity data from the database with received activity data, for example within predetermined tolerance limits;
outputting the result of that comparison as a verification of the radioactive material source.

14. A method in accordance with claim 13 wherein a plurality of tracking devices are provided, each associated with an individual radioactive material source.

15. A method in accordance with claim 13 or 14 wherein a plurality of remote data capture means are provided, and data is collected at a plurality of locations.

## Patentansprüche

1. Ein verfolgbarer Behälter (1) für die Lagerung und den Transport von radioaktivem Material (14), der Folgendes beinhaltet:
eine Umschließung aus Radioaktivitätsabschirmung, die aus einem dichten metallischen Material hergestellt oder damit ausgekleidet ist, welche ein abgeschirmtes umschlossenes Volumen (7) definiert, das einen Faraday-Käfig bildet, der von der äußeren Umgebung radiologisch isoliert ist, in der ein radioaktives Material enthalten sein kann, und
eine Verfolgungsvorrichtung zur Verwendung mit einem radioaktiven Material,
**gekennzeichnet durch**:
einen Strahlungsdetektor (10), der mit einem radioaktiven Material (14) **dadurch** assoziiert werden kann, dass er angepasst ist, um innerhalb des Behälters (1) platziert zu werden, um Strahlungsaktivität von dem Material in dem umschlossenen Volumen zu erkennen;
ein Radiofrequenz-Identifikationsmodul (12, 13), das mit dem Behälter (1) assoziiert ist, wobei das Radiofrequenz-Identifikationsmodul (12, 13) mindestens Folgendes beinhaltet:
ein Datenregister, um einen eindeutigen Produktidentifikationscode zu speichern, der einzig dazu dient, ein radioaktives Material (14), mit dem er assoziiert ist, zu identifizieren,
einen Prozessor mit einer Datenübertragungsverbindung mit jedem von dem Strahlungsdetektor und dem Datenregister, um einen Live-Datenstrom von Aktivitätsdaten von dem Detektor zu empfangen und zu verarbeiten, und diesen mit dem eindeutigen Produktidentifikationscode in einem verarbeiteten Datenpaket zu assoziieren;
eine Antenne (13), um eine Übermittlung eines Datenelements, das sowohl den eindeutigen Produktidentifikationscode als auch die verarbeiteten Aktivitätsdaten beinhaltet, an ein entferntes Datenerfassungsmittel (16) zu ermöglichen;
wobei sich mindestens die Antenne (13) in mechanischer Assoziation mit einem Behälter (1), aber außerhalb des strahlungsabgeschirmten umschlossenen Volumens (7), befindet.

2. Verfolgbarer Behälter gemäß Anspruch 1, wobei sich einige oder alle der Elemente (12), die das Radiofrequenz-Identifikationsmodul bilden, abgesehen von der Antenne (13), in mechanischer Assoziation mit einem Behälter (1), aber außerhalb des strahlungsabgeschirmten umschlossenen Volumens (7), befinden.

3. Verfolgbarer Behälter gemäß einem der vorhergehenden Ansprüche, wobei mindestens das Datenregister, der Prozessor und die Antenne in einer einzigen Radiofrequenz-Identifikationseinheit (12, 13) kompakt miteinander assoziiert sind.

4. Verfolgbarer Behälter gemäß Anspruch 3, wobei die Radiofrequenz-Identifikationseinheit ein Gehäuse beinhaltet, das ein Befestigungsmittel für eine lösbare oder dauerhafte Befestigung der Einheit an einem Behälter als ein Radiofrequenz-Identifikationskennzeichen definiert.

5. Verfolgbarer Behälter gemäß einem der vorhergehenden Ansprüche, der ferner eine tragbare Leistungsquelle beinhaltet, um eines oder mehr der Identifikationseinheit, des Prozessors, der Antenne und des Detektors mit Leistung zu versorgen.

6. Verfolgbarer Behälter gemäß Anspruch 5, der eine tragbare Leistungsquelle in dem Behälter beinhaltet, um den Detektor mit Leistung zu versorgen.

7. Verfolgbarer Behälter gemäß einem der vorhergehenden Ansprüche, wobei der Detektor (10) ein Detektorelement beinhaltet, das aus einem Halbleitermaterial oder Materialien, die ausgewählt wurden, um inhärent als eine direkte Materialeigenschaft eine direkte veränderliche photoelektrische Reaktion auf Strahlung von der Quelle zu zeigen, gefertigt ist.

8. Verfolgbarer Behälter gemäß Anspruch 6, wobei die Materialien, die das Halbleiterdetektorelement ausmachen, als massiver Einkristall geformt sind und aus Cadmiumtellurid, Cadmiumzinktellurid (CZT), Cadmiummangantellurid (CMT) und Legierungen davon ausgewählt sind.

9. Verfolgbarer Behälter gemäß einem der vorhergehenden Ansprüche, der ferner eine Quelle von radioaktivem Material beinhaltet, die innerhalb des umschlossenen Volumens enthalten ist.

10. Ein System zum Verfolgen mindestens einer Quelle von radioaktivem Material, das Folgendes beinhaltet:
mindestens einen verfolgbaren Behälter gemäß einem der Ansprüche 1 bis 9;
ein Verwaltungssystem (19, 20, 21) für radioaktives Material, das mindestens eine Datenbank umfasst, wobei die mindestens eine Datenbank einen darin gespeicherten Satz elektronischer Datenaufzeichnungen aufweist, die einen assoziativen Bezug zwischen einem eindeutigen Identifikationscode und einem erwarteten Verhalten der radioaktiven Aktivität für mindestens eine, und vorzugsweise jede, Quelle von radioaktivem Material bereitstellen;
ein Datenerfassungsmittel (16) zum Erfassen eines Datenelements, das den eindeutigen Produktidentifikationscode und die verarbeiteten Aktivitätsdaten umfasst,
von Zeit zu Zeit von einer Verfolgungsvorrichtung und zum Weiterleiten der Daten an das Verwaltungssystem;
wobei das Verwaltungssystem (19, 20, 21) angepasst ist, um den eindeutigen davon empfangenen Produktidentifikationscode zu nutzen, um den ersten Satz elektronischer Datenaufzeichnungen, die in dem Datensatz gespeichert sind, durch Assoziation mit diesem Code zu identifizieren, um einen Vergleich der empfangenen Aktivitätsdaten,
die mit diesem eindeutigen Produktinformationscode assoziiert sind, mit den vorhergesagten Aktivitätsdaten von der Datenbank zu ziehen und um ein Ergebnis dieses Vergleichs als eine Überprüfung des radioaktiven Materials auszugeben.

11. System gemäß Anspruch 10, das eine große Vielzahl von Verfolgungsvorrichtungen beinhaltet, die jeweils mit einer Quelle von radioaktivem Material und/oder mit einem Behälter, der zum Enthalten einer derartigen Quelle von radioaktivem Material geeignet ist, assoziiert sind, wobei jedes der Datenregister der Radiofrequenz-Identifikationsmodule jeder derartigen Vorrichtung mit einem eindeutigen Produktidentifikationscode versehen ist.

12. System gemäß einem der Ansprüche 10 bis 11, das ferner eine Vielzahl von automatisierten und/oder anwenderbetriebenen Datenerfassungseinheiten zum Erfassen von Daten von Verfolgungsvorrichtungen an einer Vielzahl von entfernten verteilten Stellen beinhaltet, wobei einige oder alle der Datenerfassungseinheiten von dem Verwaltungssystem entfernt sind und in Ferndatenkommunikation damit stehen.

13. Ein Verfahren zum Verfolgen und Überprüfen einer Quelle (14) von radioaktivem Material und vorzugsweise einer Vielzahl derartiger Quellen über einen Zeitraum, wobei das Verfahren durch Folgendes gekennzeichnet ist:
Assoziieren eines Strahlungsdetektors (10) mit einem radioaktiven Material durch Platzieren eines Strahlungsdetektors innerhalb eines Behälters (1), der eine Strahlungsabschirmung, die aus einem dichten metallischen Material hergestellt oder
damit ausgekleidet ist, beinhaltet, um, wenn geschlossen, eine strahlungsabgeschirmte Umschließung (7), die einen Faraday-Käfig bildet, der von der äußeren Umgebung, in der radioaktives Material enthalten ist, radiologisch isoliert ist, zu definieren;
Assoziieren eines Radiofrequenz-Identifikationsmoduls (12, 13) mit einem radioaktiven Material in Datenkommunikation mit dem Strahlungsdetektor, wobei das Modul mindestens ein Datenregister, um einen eindeutigen Produktidentifikationscode zu speichern, der dazu dient, ein radioaktives Material (14), mit dem er assoziiert ist,
eindeutig zu identifizieren, einen Prozessor, um einen Datenstrom aus Aktivitätsdaten von dem Detektor zu empfangen und zu verarbeiten und diesen mit dem eindeutigen Produktidentifikationscode zu assoziierten, und eine Antenne beinhaltet, so dass mindestens die Antenne (13) in mechanischer Assoziation mit einem Behälter (1), aber außerhalb des strahlungsabgeschirmten umschlossenen Volumens (7) platziert ist;
Betreiben des Prozessors, um ein Datenelement zu erzeugen, das sowohl den eindeutigen Produktidentifikationscode als auch die verarbeiteten Aktivitätsdaten beinhaltet;
Abrufen des Datenelements über ein entferntes Datenerfassungsmittel (16);
Weiterleiten des Datenelements an ein Verwaltungssystem (19, 20, 21) einer radioaktiven Quelle, das mindestens eine Datenbank mit einem darin gespeicherten Satz elektronischer Datenaufzeichnungen, die mindestens einen assoziativen Bezug zwischen einem eindeutigen Identifikationscode und einem erwarteten Verhalten der radioaktiven Aktivität für jede Radioisotopquelle bereitstellen, umfasst;
für jedes so übermittelte Datenelement, Verwenden des eindeutigen Produktidentifikationscodes, der von dem Verwaltungssystem empfangen worden ist,
um den ersten Satz elektronischer Datenaufzeichnungen, die in einem mit diesem Code assoziierten Datensatz gespeichert sind, zu identifizieren;
Vergleichen vorhergesagter Aktivitätsdaten von der Datenbank mit empfangenen Aktivitätsdaten, zum Beispiel innerhalb vorbestimmter Toleranzgrenzen;
Ausgeben des Ergebnisses dieses Vergleichs als eine Überprüfung der Quelle von radioaktivem Material.

14. Verfahren gemäß Anspruch 13, wobei eine Vielzahl von Verfolgungsvorrichtungen bereitgestellt sind, die jeweils mit einer individuellen Quelle von radioaktivem Material assoziiert sind.

15. Verfahren gemäß Anspruch 13 oder 14, wobei eine Vielzahl von entfernten Datenerfassungsmitteln bereitgestellt sind und Daten an einer Vielzahl von Stellen erhoben werden.

## Revendications

1. Un récipient repérable (1) destiné au stockage et au transit de matière radioactive (14) comprenant :
une enceinte de blindage contre la radioactivité réalisée à partir de ou enduite d'une matière métallique dense définissant un volume enceint blindé (7) qui constitue une cage de Faraday isolée radiologiquement de l'environnement extérieur dans lequel une matière radioactive peut être contenue, et
un dispositif de repérage destiné à être utilisé avec une matière radioactive **caractérisé par** :
un détecteur de rayonnement (10) pouvant être associé à une matière radioactive (14) en ce qu'il est conçu pour être placé au sein du récipient (1) pour détecter une activité de rayonnement provenant de la matière dans le volume enceint ;
un module d'identification de fréquence radio (12, 13) associé au récipient (1), lequel module d'identification de fréquence radio (12, 13) comprend au moins :
un registre de données pour stocker un code d'identification de produit unique qui sert uniquement à identifier une matière radioactive (14) à laquelle il est associé,
un processeur avec une liaison de transfert de données vers chaque organe parmi le détecteur de rayonnement et le registre de données pour recevoir et traiter un flot de données en direct de données d'activité provenant du détecteur et associer cela au code d'identification de produit unique dans un paquet de données traitées,
une antenne (13) pour permettre la transmission d'un élément de données comprenant à la fois le code d'identification de produit unique et les données d'activité traitées vers un moyen de capture de données à distance (16) ;
dans lequel au moins l'antenne (13) est en association mécanique avec un récipient (1) mais en dehors du volume enceint blindé contre un rayonnement (7).

2. Un récipient repérable conformément à la revendication 1 dans lequel une partie ou la totalité des éléments (12) autres que l'antenne (13) constituant le module d'identification de fréquence radio sont en association mécanique avec un récipient (1) mais en dehors du volume enceint blindé contre un rayonnement (7).

3. Un récipient repérable conformément à n'importe quelle revendication précédente dans lequel au moins le registre de données, le processeur et l'antenne sont associés de façon compacte ensemble dans une unité d'identification de fréquence radio unique (12, 13).

4. Un récipient repérable conformément à la revendication 3 dans lequel l'unité d'identification de fréquence radio comprend un logement définissant un moyen d'attache pour une attache libérable ou permanente de l'unité à un récipient comme une étiquette d'identification de fréquence radio.

5. Un récipient repérable conformément à n'importe quelle revendication précédente comprenant en outre une source d'alimentation portable pour alimenter un ou plusieurs organes parmi l'unité d'identification, le processeur, l'antenne, et le détecteur.

6. Un récipient repérable conformément à la revendication 5 comprenant une source d'alimentation portable dans le récipient pour alimenter le détecteur.

7. Un récipient repérable conformément à n'importe quelle revendication précédente dans lequel le détecteur (10) comprend un élément de détecteur fabriqué à partir d'une matière ou de matières de semi-conducteur sélectionnées pour faire preuve de façon inhérente comme propriété de matière directe d'une réponse photoélectrique variable directe à un rayonnement de source.

8. Un récipient repérable conformément à la revendication 6 dans lequel les matières constituant l'élément de détecteur de semi-conducteur sont formées comme un monocristal en vrac et sélectionnées parmi le tellurure de cadmium, le tellurure de cadmium-zinc (CZT), le tellurure de cadmium-manganèse (CMT) et des alliages de ceux-ci.

9. Un récipient repérable conformément à n'importe quelle revendication précédente comprenant en outre une source de matière radioactive contenue au sein du volume enceint.

10. Un système destiné à repérer au moins une source de matière radioactive comprenant :
au moins un récipient repérable conformément à une des revendications 1 à 9 ;
un système de gestion de matière radioactive (19, 20, 21) qui inclut au moins une base de données, l'au moins une base de données ayant un ensemble d'enregistrements de données électroniques stockés dans celle-ci fournissant une référence associative entre un code d'identification unique et un comportement d'activité radioactive attendu pour au moins une, et de préférence chaque, source de matière radioactive ;
un moyen de capture de données (16) destiné à capturer un élément de données incluant le code d'identification de produit unique et des données d'activité traitées provenant d'un dispositif de repérage de temps en temps, et destiné à passer les données au système de gestion ;
dans lequel le système de gestion (19, 20, 21) est conçu pour se servir du code d'identification de produit unique ainsi reçu pour identifier le premier ensemble d'enregistrements de données électroniques stockés dans l'ensemble de données en association avec ce code, pour réaliser une comparaison des données d'activité reçues associées à ce code d'identification de produit unique et des données d'activité prédites provenant de la base de données, et pour sortir un résultat de cette comparaison comme vérification de la matière radioactive.

11. Un système conformément à la revendication 10 comprenant une importante pluralité de dispositifs de repérage, chacun étant associé à une source de matière radioactive et/ou à un récipient adéquat pour contenir une telle source de matière radioactive, chacun des enregistrements de données des modules d'identification de fréquence radio de chaque dit dispositif de la sorte étant pourvu d'un code d'identification de produit unique.

12. Un système conformément à une des revendications 10 à 11 comprenant en outre une pluralité d'unités de capture de données automatisées et/ou actionnées par un utilisateur destinées à capturer des données à partir de dispositifs de repérage au niveau d'une pluralité d'emplacements répartis à distance, une partie ou la totalité des unités de capture de données étant à distance du système de gestion, et en communication de données à distance avec celui-ci.

13. Un procédé pour le repérage et la vérification d'une source de matière radioactive (14), et plus préférablement d'une pluralité de telles sources, dans le temps, le procédé étant **caractérisé par** :
associer un détecteur de rayonnement (10) à une matière radioactive en plaçant un détecteur de rayonnement au sein d'un récipient (1) comprenant un blindage contre un rayonnement réalisé à partir de ou enduit d'une matière métallique dense pour définir lorsqu'il est près d'une enceinte blindée contre un rayonnement (7) qui constitue une cage de Faraday isolée radiologiquement de l'environnement extérieur dans lequel est contenue la matière radioactive ;
associer un module d'identification de fréquence radio (12, 13) à une matière radioactive en communication de données avec le détecteur de rayonnement, lequel module comprend au moins un registre de données pour stocker un code d'identification de produit unique qui sert uniquement à identifier une matière radioactive (14) à laquelle il est associé, un processeur pour recevoir et traiter un flot de données de données d'activité provenant du détecteur et associer cela au code d'identification de produit unique, et une antenne, de telle sorte qu'au moins l'antenne (13) soit placée en association mécanique avec un récipient (1) mais en dehors du volume enceint blindé contre un rayonnement (7) ;
actionner le processeur pour produire un article de données comprenant à la fois le code d'identification de produit unique et les données d'activité traitées ;
récupérer l'article de données via un moyen de capture de données à distance (16) ;
faire passer l'article de données à un système de gestion de source radioactive (19, 20, 21) qui inclut au moins une base de données ayant un ensemble d'enregistrements de données électroniques stockés dans celle-ci fournissant une référence associative entre un code d'identification unique et un comportement d'activité radioactive attendu pour chaque source radio-isotope ;
pour chaque article de données ainsi transmis, utiliser le code d'identification de produit unique reçu par le système de gestion pour identifier le premier ensemble d'enregistrements de données électroniques stockés dans un ensemble de données par association avec ce code ;
comparer des données d'activité prédites provenant de la base de données avec des données d'activité reçues, par exemple dans des limites de tolérance prédéterminées ;
sortir le résultat de cette comparaison comme vérification de la source de matière radioactive.

14. Un procédé conformément à la revendication 13 dans lequel une pluralité de dispositifs de repérage sont fournis, chacun étant associé à une source de matière radioactive individuelle.

15. Un procédé conformément à la revendication 13 ou la revendication 14 dans lequel une pluralité de moyens de capture de données à distance sont fournis, et des données sont collectées au niveau d'une pluralité d'emplacements.
